# EUROPEAN PATENT SPECIFICATION

(11) **EP 0 476 381 B1**
(45) Date of publication and mention of the grant of the patent: **17.04.1996**
(21) Application number: 91114463.2
(22) Date of filing: 28.08.1991
(51) Int. Cl.: G05B 19/4103

(54) **Route interpolation method for robot**
Weginterpolationsverfahren für Roboter
Méthode d'interpolation de trajet pour robot

(30) Priority: 30.08.1990 JP 230035/90
(43) Date of publication of application: 25.03.1992
(73) Proprietor: KABUSHIKI KAISHA KOBE SEIKO SHO also known as Kobe Steel Ltd., Kobe 651 (JP)
(72) Inventor: Nishimura, Toshihiko, Higashinada-ku, Kobe-shi (JP); Yomota, Masahiko, Nishinomiya-shi, Hyogo-ken (JP)
(74) Representative: Tiedtke, Harro, Dipl.-Ing.

(56) References cited:
- EP-A- 0 042 202
- EP-A- 0 103 351
- EP-A- 0 359 819
- EP-A- 0 420 985
- DE-A- 3 545 795
- ELEKTRONIK, vol. 34, no. 19, September 1985, MUNCHEN DE pages 83 - 89; PROF. DIPL.-ING. PETER F. ORLOWSKI U.A.: 'Fahrkurvenrechner mit Einplatinen-Computer'

## Description

The present invention relates to a robot route interpolation method for interpolating a polygonal route of a robot hand which is defined by three or more predetermined points.

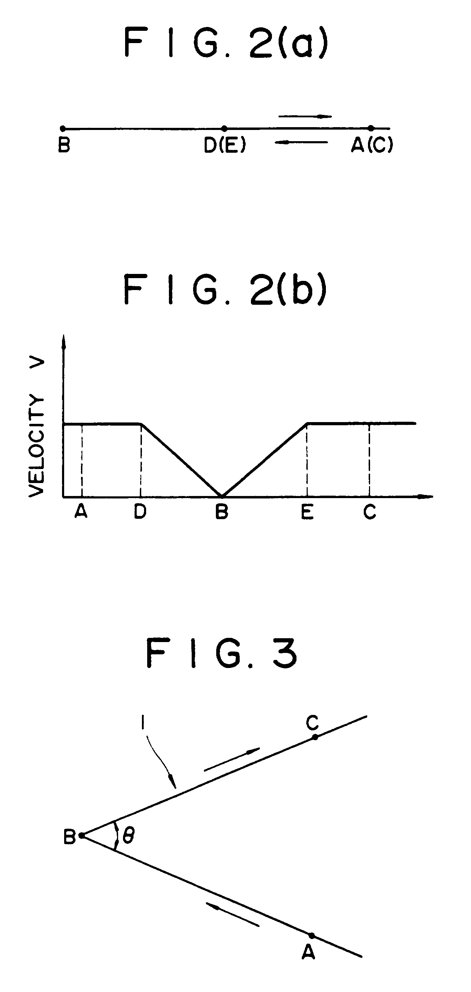

As shown in Fig. 3, when-a robot hand (not shown) is moved along a polygonal route 1 which is defined by three predetermined points A, B and C, the polygonal route becomes discontinuous at the turning point B and therefore, a velocity change or an acceleration also becomes discontinuous.

As a result, there arises such a drawback as exerting a greater shock on the robot hand.

Accordingly, in order to solve the above drawback, there has been proposed a route interpolation method in which the above polygonal route 1 is interpolated by a curve line so as not to pass the above turning point B.

For example, document JP-A-127443, an interpolation method which is carried out in the following manners. First, along a route of a straight line before a turning point, the robot hand is moved toward the turning point at a velocity which is monotonously reduced and becomes zero at the turning point. Next, along a route of a straight line after the turning point, the robot hand is moved at a velocity which is monotonously increased from zero to the predetermined velocity. Then, there is added an increment from the above turning point to the position determined by the above velocity increasing interpolation, on the position determined by the above velocity reducing interpolation, to thereby form the route.

However, in the above prior art, the route interpolation is carried out by adding vectors which are changed during uniformly reducing the velocity or uniformly increasing the velocity, so that the acceleration becomes larger as an intersection angle formed between two adjacent lines of the polygonal route (refer to Fig.3) becomes small, thus exerting a greater shock on the robot hand.

A method comprising the features of the pre-characterizing clause of the claim is known from document EP-A-359819. According to this known method, in a case where the movement along two axes is controlled, the velocity and the amounts of movement along the two axes are set. Interpolated components of amounts of movement along the respective two axes are computed and are output to a pulse distributor. The pulse distributor executes a pulse distribution computation in accordance with the interpolated data, and the movement of the robot hand is accordingly controlled. If the direction of the movement of the robot hand is changed, shocks may be exerted on the robot hand.

From document DE-A-3545795 a method for numerically controlling the movement of a robot hand is known. This known control method allows to follow a predetermined trajectory while, at the same time, mechanical shocks are avoided. To this effect, the velocity of the movements along different axes will be continuously increased and decreased before and after a change in the direction of movement, if the velocity differences along the respective axes are large. If the velocity differences are small, the movements are stopped abruptly and will be started abruptly.

It is an object of the present invention to provide a robot route interpolation method capable of moving the robot hand smoothly along an interpolated route between two predetermined points at which predetermined velocity vectors prevail, without exerting undue shocks on the robot hand.

This object is achieved by the robot route interpolation method according to the patent claim.
Fig.1 is an illustrative view of an interpolation route formed by using a route interpolation method in accordance with one embodiment of the present invention;
Figs. 2 (a) and 2 (b) are views showing another example of the above route interpolation method in accordance with the present invention, in which Fig. 2 (a) is an illustrative view of a polygonal route and Fig. 2(b) is a graph showing velocity changes when a robot is moved along an interpolation route; and
Fig. 3 is view of a polygonal route for illustrating a background of the present invention.

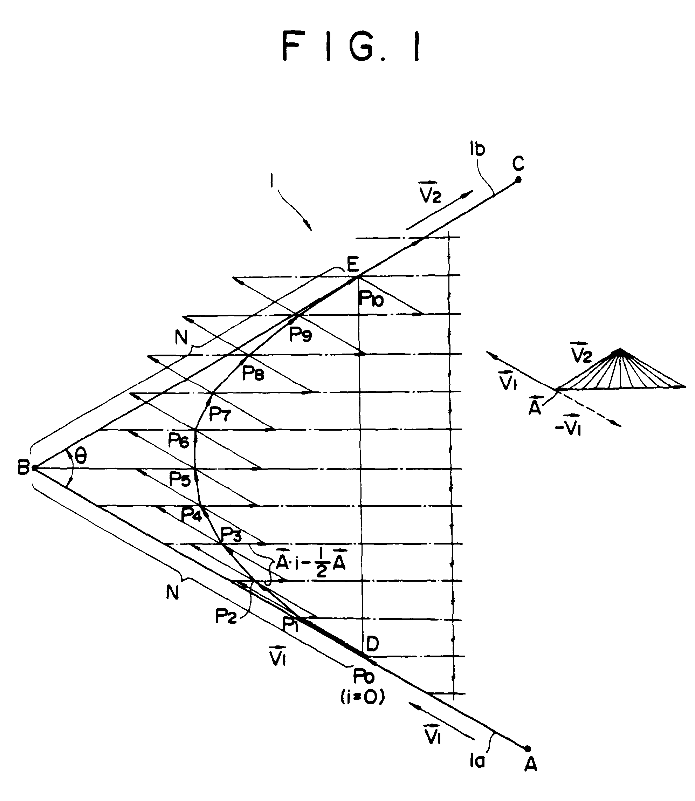

As shown in Fig. 1, when a robot hand (not shown) is moved on a polygonal route 1 defined by three predetermined points A, B and C from the point A to the point C, there are set both a first velocity vector $\vec{\text{V}}$₁ (a shift vector for one unit control cycle) on a route la of the above polygonal route 1 before a turning point B and a second velocity $\vec{\text{V}}$₂ (a shift vector for one unit control cycle) on a route 1b of the above polygonal route 1 after the turning point B. Next, in order to form an interpolation route extending from a first point D (P_{O}) on the above route 1a to a second point E (P₁₀) on the above route 1b, a number N of subdivisions for dividing a region from the point D to the turning point B and a region from the turning point B to the point E are set. (N is set at 5 in each region, in this embodiment).

Further, at the positions corresponding to each point Pᵢ divided by the above number N, a position vector $\vec{{\text{P}}_{\text{i}}}$ (Xₚᵢ, Yₚᵢ, Zₚᵢ) of the above robot hand is successively calculated based on the following formula (1) so that a parabolic path which is asymptotic to the polygonal route can be obtained:$\vec{{\text{P}}_{\text{i}}} \text{=} \vec{{\text{P}}_{\text{i-1}}} \text{+} \vec{{\text{V}}_{\text{1}}} \text{+} \vec{\text{A}} \text{·i - 1/2·} \vec{\text{A}}$

The value (i) represents a number corresponding to any one of 0 to 2·N (2·N = 10 in this embodiment), and the valuer $\vec{\text{A}}$ represents an acceleration vector expressed as$\vec{\text{A}} \text{= (} \vec{{\text{V}}_{\text{2}}} \text{-} \vec{{\text{V}}_{\text{1}}} \text{)/2·N}$

The successive, processing steps of the route interpolation method in accordance with this embodiment will be hereinafter explained in detail.

When the robot hand reaches the point D, the following processing is carried out.
(1) It is supposed that the value (i) equals to 0 and that the position vector at the first point D is P_{O}. The acceleration vector $\vec{\text{A}}$ is calculated in accordance with the following equation:$\vec{\text{A}} \text{= (} \vec{{\text{V}}_{\text{2}}} \text{-} \vec{{\text{V}}_{\text{1}}} \text{) / 10}$
(2) It is supposed that the value (i) equals to (i + 1). Then the following equations are calculated.$\text{Δ} \vec{{\text{V}}_{\text{i}}} \text{=} \vec{{\text{V}}_{\text{1}}} \text{+} \vec{\text{A}} \text{·i -1/2·} \vec{\text{A}}$$\vec{{\text{P}}_{\text{i+1}}} \text{=} \vec{{\text{P}}_{\text{i}}} \text{+ Δ} \vec{{\text{V}}_{\text{i}}}$ Δ $\vec{{\text{V}}_{\text{i}}}$ is the velocity vector between points Pᵢ₋₁ and Pᵢ.
(3) The robot hand is successively moved from point P_{O} through points Pᵢ to point E based on the calculated position vectors.

The processing according to equations (4) and (5) is carried out repeatedly at each interval of a control cycle. When the value (i) equals to 10 at the timing of the processing of the equation (5), the robot hand reaches the second point E and then is moved toward the point C at the uniform second velocity on a straight line.

That is, in accordance with the present invention, an acceleration vector $\vec{\text{A}}$ is obtained from the first velocity vector $\vec{\text{V₁}}$ to the second velocity $\vec{\text{V₂}}$, and based on the above first velocity $\vec{\text{V₁}}$ and the above acceleration, the route interpolation is performed in such a manner that the robot hand is moved at the uniform velocity of the first velocity vector $\vec{\text{V₁}}$and is also moved at a uniform acceleration in the direction of the above acceleration vector. Therefore, there is formed a parabolic interpolation route which is asymptotic to the polygonal route 1.

Furthermore, not only at the transition points (the points D and E) between the polygonal route 1 and the interpolation route but also at the points Pᵢ of the interpolation route an abrupt velocity change is not caused even in the case that an intersection angle θ between the routes 1a and 1b becomes small, thus preventing such a drawback as exerting a greater shock on the robot hand.

Moreover, in accordance with the present invention, in the case that the angle θ becomes zero (refer to Fig. 2(a)), it is understood that the robot is moved in such a way as to be simply accelerated or decelerated on a straight line running through the turning point B, so that an abrupt velocity change does not arise (refer to Fig. 2 (b)).
(1) Tool position coordinates X, Y, Z and tool position vectors 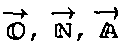 .
(2) Tool position coordinates X, Y, Z and tool position Eulerian angles α, β, γ.
(3) Tool position coordinates X, Y, Z and wrist joint angles θ₄, θ₅, θ₆.
(4) Arm joint angles θ₁, θ₂, θ₃ and wrist joint angles θ₄, θ₅, θ₆.

Furthermore, in the route interpolation method in accordance with the present invention, the variables are not limited in the above described six variables, but expanded to n-variables (n ≥ 1).

Still further, in this method, the joint velocity $\vec{\text{θ̇i}}$ can be directly obtained from the velocity vector Δ $\vec{{\text{V}}_{\text{i}}}$ by using the Jacobian matrix J.

As mentioned above, the present invention relates to a route interporation method for interporating a polygonal route of a robot which is defined by the predetermined three or more points, wherein an acceleration at the time when a first velocity on the above polygonal route before a turning point is changed into a second velocity on the above polygonal route after the turning point is obtained based on the above first and second velocities so that, based on the above first velocity and the above acceleration, the above robot is moved toward the turning point at a uniform velocity of the first velocity and is also moved at a uniform acceleration in the direction of the above acceleration. Therefore, even in the case of performing the route interpolation for any type of the polygonal route, it is possible to move the robot smoothly on the route without exerting any shock on the robot.

The present invention has been described in detail with particular reference to preferred embodiments thereof but it will be understood that variations and modification can be effected within the sprit and scope of the invention.

Described herein is a robot route interpolation method for interporating a polygonal route of a robot which is defined by the predetermined three or more points, wherein the acceleration at the time when a first velocity on the above polygonal route before a turning point is changed into a second velocity on the above polygonal route after the turning point is obtained based on the above first and second velocities so that, based on the above first velocity and the above acceleration, the above robot is moved toward the turning point at an uniform velocity of the first velocity and is also moved at an uniform acceleration in the direction of the above acceleration.

## Claims

1. A robot route interpolation method for interpolating a polygonal route of a robot hand between a predetermined first point D and a predetermined second point E, said first and second points being localized on either side of a turning point (B) of the polygonal route wherein the direction of a predetermined velocity vector $\vec{\text{V₁}}$, when reaching the first point D, and the direction of a predetermined velocity vector $\vec{\text{V₂}}$, when leaving the second point E, are different from each other, characterized by
moving the robot hand successively from a point Pₒ through points Pᵢ along an interpolation route for i = (1 to 2 · N), with Pₒ = D, P_{2N} = E and with 2 · N = (predetermined number of subdivisions between the first point D and the second point E),
wherein the position vector $\vec{{\text{P}}_{\text{i}}}$ is given by$\vec{{\text{P}}_{\text{i}}} \text{=} \vec{{\text{P}}_{\text{i-1}}} \text{+} \vec{{\text{V}}_{\text{1}}} \text{+} \vec{\text{A}} \text{· i - 1/2 ·} \vec{\text{A}}$ with$\vec{\text{A}} \text{= (} \vec{{\text{V}}_{\text{2}}} \text{-} \vec{{\text{V}}_{\text{1}}} \text{)/2 · N}$
and wherein the velocity vectored Δ $\vec{{\text{V}}_{\text{i}}}$ between points Pᵢ₋₁
and Pᵢ is given by$\text{Δ} \vec{{\text{V}}_{\text{i}}} \text{=} \vec{{\text{V}}_{\text{1}}} \text{+} \vec{\text{A}} \text{· i - 1/2 ·} \vec{\text{A}}$

## Patentansprüche

1. Weginterpolationsverfahren für einen Roboter für das Interpolieren eines Polygonalweges einer Roboterhand zwischen einem vorbestimmten ersten Punkt D und einem vorbestimmten zweiten Punkt E, wobei die ersten und zweiten Punkte an jeder Seite eines Drehpunktes (B) des Polygonalweges angeordnet sind, wobei sich die Richtung eines vorbestimmten Geschwindigkeitssensors $\vec{\text{V₁}}$ beim Erreichen des ersten Punktes D und die Richtung eines vorbestimmten
Geschwindigkeitssensors $\vec{\text{V₂}}$ beim Verlassen des zweiten Punktes E voneinander unterscheiden, gekennzeichnet durch
das sukzessive Bewegen der Roboterhand von einem Punkt P₀ durch die entlang eines Interpolationsweges gelegenen Punkte Pᵢ, wobei i = (1 bis 2 · N) mit P₀ = D, P_{2N} = E und mit 2 · N = (vorbestimmte Anzahl von Unterteilungen zwischen dem ersten Punkt D und dem zweiten Punkt E),
wobei der Positionsvektor $\vec{{\text{P}}_{\text{i}}}$ gegeben ist durch$\vec{{\text{P}}_{\text{i}}} \text{=} \vec{{\text{P}}_{\text{i-1}}} \text{+} \vec{{\text{V}}_{\text{1}}} \text{+} \vec{\text{A}} \text{· i - 1/2 ·} \vec{\text{A}}$
mit$\vec{\text{A}} \text{= (} \vec{{\text{V}}_{\text{2}}} \text{-} \vec{{\text{V}}_{\text{1}}} \text{)/2 · N}$
und wobei der Geschwindigkeitsvektor Δ $\vec{{\text{V}}_{\text{i}}}$ zwischen den Punkten Pᵢ₋₁ und Pᵢ gegeben ist durch$\text{Δ} \vec{{\text{V}}_{\text{i}}} \text{=} \vec{{\text{V}}_{\text{1}}} \text{+} \vec{\text{A}} \text{· i - 1/2 ·} \vec{\text{A}}$

## Revendications

1. Procédé d'interpolation du trajet d'un robot pour interpoler un trajet polygonal d'une main de robot entre un premier point prédéterminé D et un second point prédéterminé E, lesdits premier et second points étant situés de chaque côté d'un point de basculement (B) du trajet polygonal, dans lequel la direction d'un vecteur vitesse prédéterminé $\vec{\text{V₁}}$, lorsqu'on atteint le premier point D, et la direction d'un vecteur vitesse prédéterminé $\vec{\text{V₂}}$, lorsqu'on quitte le second point E, sont différentes l'une de l'autre, caractérisé en ce que
la main du robot est déplacée de manière successive depuis un point P₀ jusqu'à des points Pᵢ avec i = (1 à 2 x N) situés le long d'un trajet d'interpolation, avec P₀ = D, P_{2N} = E et avec 2N = nombre prédéterminé de subdivisions entre le premier point D et le second point E,
dans lequel le vecteur position $\vec{{\text{P}}_{\text{i}}}$ est donné par$\vec{{\text{P}}_{\text{i}}} \text{=} \vec{{\text{P}}_{\text{i-1}}} \text{+} \vec{{\text{V}}_{\text{1}}} \text{+} \vec{\text{A}} \text{. i - 1/2 .} \vec{\text{A}}$
avec$\vec{\text{A}} \text{= (} \vec{{\text{V}}_{\text{2}}} \text{-} \vec{{\text{V}}_{\text{1}}} \text{) /2 . N}$
et dans lequel le vecteur vitesse $\vec{{\text{ΔV}}_{\text{i}}}$ entre les points Pᵢ₋₁ et Pᵢ est donné par$\vec{{\text{ΔV}}_{\text{i}}} \text{=} \vec{{\text{V}}_{\text{1}}} \text{+} \vec{\text{A}} \text{. i - 1/2 .} \vec{\text{A}}$
